# EUROPEAN PATENT APPLICATION

(11) **EP 1 324 575 A1**
(43) Date of publication of application: **02.07.2003**
(21) Application number: 01131000.0
(22) Date of filing: 28.12.2001
(51) Int. Cl.: H04M 1/57, H04Q 3/72, H04M 1/2745

(54) **Generic call-numbers for calling line identification**

(71) Applicant: Sony International (Europe) GmbH, 10785 Berlin (DE)
(72) Inventor: Winkler, Gregor, 70327 Stuttgart (DE)
(74) Representative: Körber, Martin, Dipl.-Phys.

(57) **Abstract**

A method (30), a telecommunication device (10) and a software product for implementing a method (30) on a telecommunication device (10) are presented, whereby the method (30) comprises steps for providing a telecommunication device (10) with a call-number directory (20) assigning calling party identifications (23) to defined call-number representations (22), matching (S32, S34) a call-number of a calling party with the call-number representations (24, 26) in the call-number directory (20) and, in case a generic call-number representation (26) in the call-number directory (20) matches a number sequence of the call-number of a calling party, outputting the calling party identification (27) assigned to the generic call-number representation (26).

## Description

The present invention relates to call initiated functions of telecommunication devices, in particular to functions using a calling line identification presentation.

Most mobile phones and many phones in fixed networks use calling line identification presentations in conjunction with a name identification of the calling party from a phone book or a call-number directory facility on the phone, respectively. Calling line identification presentation denotes a service of telephone networks where the telephone number of the calling party is displayed on the phone receiving the call. When the respective telephone number is found in an entry of the phone book facility of the phone receiving the call, the name assigned to that call-number in addition or instead of the call-number of the calling party is displayed.

The term "phone book" or "call-number directory" denotes a directory provided on mobile as well as fixed network telecommunication devices, whereby each record filed in the directory relates the representation of a call-number to a calling party identification. A call-number representation is the telephone number of a calling party The calling party identification related to the call-number representation in every record is usually used as a specification for the call-number and can usually be any combination of text numbers and special characters. When the records of the call-number directory are browsed to find an equivalent for a call-number, in other words, when the call-number is matched with the call-number representations in the directory, the representations of the call-numbers are suitably evaluated to confirm a match.

An identification of a calling party by a name or any sort of describing text is normally recognised much faster than a very hard to memorise call-number so that the name identification described above is a very popular tool for identifying a calling party.

However, when a call-number of a calling party cannot be found in the call-number directory, no meaningful identification will be presented, and a user has to see by himself if the displayed call-number bears any meaning to him. Especially in the business world people note call-numbers with related information identifying their business partners in the call-number directories of their phones. When a business partner calls, he will immediately be identified from the identifying information filed with the respective record in the call-number directory.

But when the same business partner calls from a different extension in the same company which is not known to any record in the call-number directory, or if somebody else from the same company calls in, it is left to the user to guess from whom the call might come.

It is therefore an object of the present invention to provide a method, a telecommunication device and a software product for use in a telecommunication device, which provide meaningful identification information of calling parties in a telecommunication device.

This object is achieved according to a method, a telecommunication device and a software product as claimed in the respective independent claims.

In particular, the above method is achieved by a method for identifying a calling party comprising the steps of providing a telecommunication device with a call-number directory assigning calling party identifications to define the call-number representations, matching a call-number of a calling party with the call-number representations in the call-number directory, and in case, a generic call-number representation in the call-number directory matches a number sequence of the call-number of a calling party, outputting the calling party identification assigned to that generic call-number representation.

The above object is further achieved by a telecommunication device with a call-number directory assigning calling party identifications to defined call-number representations and a retrieval means for outputting a calling party identification corresponding to a call-number of a calling party matching a respective call-number representation, whereby in case, that a number sequence of the call-number of a calling party matches a generic call-number representation in the call-number directory the calling party identification assigned to the generic call-number representation is outputted.

Further, the above object is achieved by a software product for implementing a method according to the present invention in a telecommunication device when stored in a storage means and executed in a processing means of the telecommunication device.

This advantageously allows a user to identify a calling party at least generically even if there is no individual match.

Additional advantageous features of the present invention are claimed in the respective sub-claims.

A generic call-number representation advantageously comprises at least one identifying character for identifying it as a generic call-number representation. Thus, generic call-numbers can easily be distinguished from a representation of an individual call-number.

If the generic call-number representation in the call-number directory matches a number sequence of the call-number of a calling party, preferably a function of the telecommunication device assigned to this generic call-number representation is executed. Thus, a user will easily be enabled to classify a calling party without having to read the calling party identification from the call-number or the user will be provided with means available with the telecommunication device preparing him for the call in advance.

In a preferred embodiment of the present invention a ringer melody assigned to a generic call-number representation is replayed by the telecommunication device in case the generic call-number representation in a call-number directory matches a number sequence of the call-number of a calling party. Hereby, the user can already classify the calling party without having to look at the display of the telecommunication device. Alternatively, other actions instead of a ringer melody can be assigned to a call-number representation like a vibration indicator, a silent indicator or even a divert to the internal voice mail.

Advantageously, in case a generic call-number representation in the call-number directory matches a number sequence of the call-number of a calling party, and the call-number of the calling party matches a further call-number representation, the calling party identification assigned to that further call-number representation is outputted along with the calling party identification assigned to the generic call-number. In the case that the calling party identification assigned to the generic call-number representation and the calling party identification assigned to a specific call-number representation are outputted along, but have different ringer melodies assigned, preferably the ringer melody assigned to the call-number representation of the specific person has higher priority and is e. g. replayed.

The present invention may advantageously be implemented on mobile phones for cellular telecommunication networks, on terminal phones of a fixed telecommunication network or any extension of a telecommunication system or the like.

In the following description, the present invention is explained in more detail with respect to special embodiments and in relation to the enclosed drawings, in which
Fig. 1 shows a telecommunication device according to the present invention,
Fig. 2 shows a call-number directory assigning calling party identifications to defined call-number representations,
Fig. 3 is a flow chart of a calling party identification according to the present invention, and
Fig. 4 shows the contents and possible different formats of the call-number of a calling party.

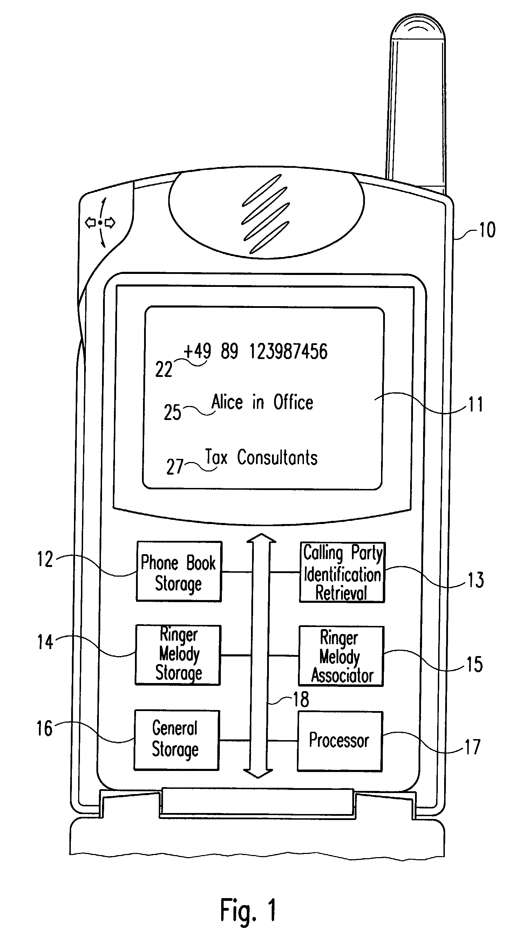

The main components of a telecommunication device 10 according to the present invention are shown in Fig. 1. It comprises a display for displaying information to a user, particularly for displaying a call-number of a calling party and/or a calling party identification information 25 and/or 27 which is related to the displayed call-number. The calling party identification information 25 or 27 is only displayed when a respective entry was found in the call-number directory usually denoted as a phone book within a phone book storage 12 of a telecommunication device 10.

A calling party identification like an individual specifying information 25 assigned to a an individual call-number representation 24 of the call-number of a calling party represents a sort of a meaningful description for specifying the respective calling party. A calling party identification like a generic specifying information 27 represents a generic name for a certain type of calling party. The type specification can be anything that groups calling parties according to a common characteristic which can be deduced from a part of their call-numbers which form a common base. This common base is denoted in the context of this specification as a generic call-number 26 the representation of which can be stored in the phone book storage 12 and can be assigned to a calling party identification as a generic specifying information 27.

To display specifying information 25 and/or 27 correlated to a call-number 22 of a calling party, the specifying information forming the respective calling party identification has to be retrieved from the call-number directory 20. The term "calling party identification" 23 denotes both an individual specifying information 25 for specifying an individual calling party and a generic specifying information 27 specifying a certain group of calling parties. The retrieval of the calling party identification is handled by the calling party identification retrieval means 13. A collection of ringer melodies is stored in a ringer melody storage 14. A ringer melody associator 15 controls the selection of a ringer melody according to preferences set by a user or according to settings in the call-number directory 20 specifically assigning a selected ringer melody to a selected call-number representation 22 or to a calling party identification 23. Upon a call coming in, the calling party identification retrieval means 13 will retrieve a calling party identification 23 for the respective call-number of the calling party and the ringer melody associator will select a ringer melody specific for the respective individual or generically identified calling party for replay. A general storage 16 comprising permanent and volatile memory units is used for storing programs and/or data. The general storage may thereby in a special embodiment of the present invention contain the before mentioned means like the phone book storage 12 and the ringer melody storage means 14. A processor 17 executes programs stored in the general storage 16 and may thereby in a special embodiment of the present invention implement the before-mentioned means, likethe calling party identification retrieval means 13 and the ringer melody associator 15 within a memory unit of the general storage 16. A data bus 18 provides the means for exchanging data between the different components of the telecommunication device 10.

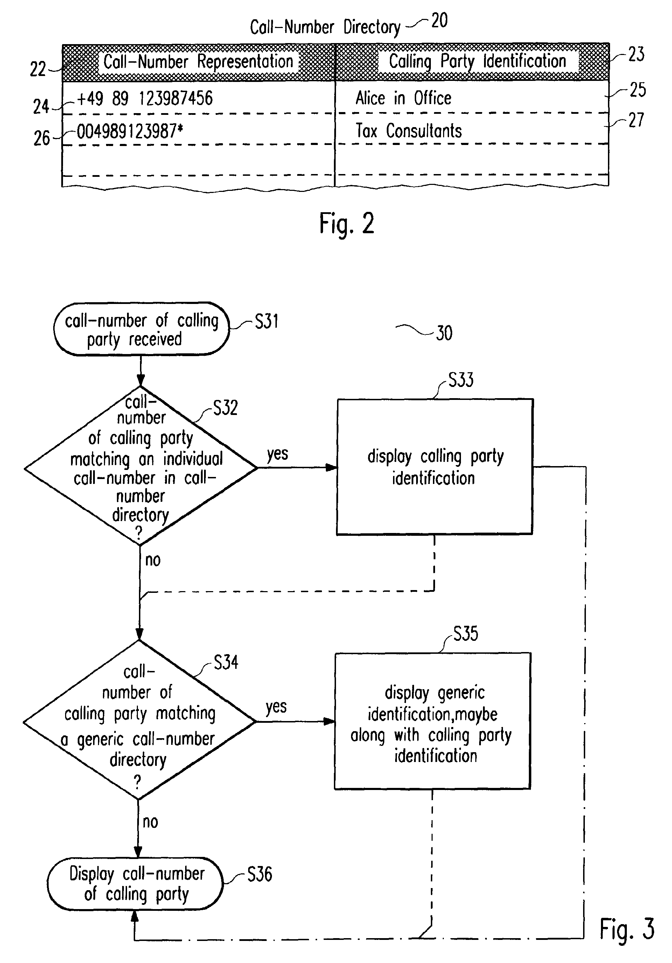

Fig. 2 shows a basic representation of a call-number directory 20 relating call-number representations 22 to calling party identifications 23. A call-number representation like 24 and 26 is assigned a respective specifying information 25 and 27 containing a description for the calling party of the respective call-number representation, meaningful to the user of the telecommunication device 10.

The call-number directory 20 may contain more types of information related to a call-number representation like e.g. a ringer melody to be played when a calling party with a matching call-number calls in, but in the representation of Fig. 2 only the substantial relation between the call-number representation 22 and the calling party identification 23 is shown.

According to the present invention two types of call-number representations 22 are stored in the call-number directory 20. The first type is a representation of a complete call-number of an individual calling party or contact person, respectively, the second type is a representation of a generic call-number which constitutes the common ground of the individual call-numbers of a certain group of calling parties, whereby the common ground is characteristic for the context of the respective group, e.g. a company, family, residence or the like.

In an alternative embodiment of the present invention, generic call-numbers are stored apart from the individual call-numbers in an extra call-number directory. Thus, whenever a call-number cannot be matched in the directory for individual call-number representations, the search is continued in the other directory for generic call-number representations.

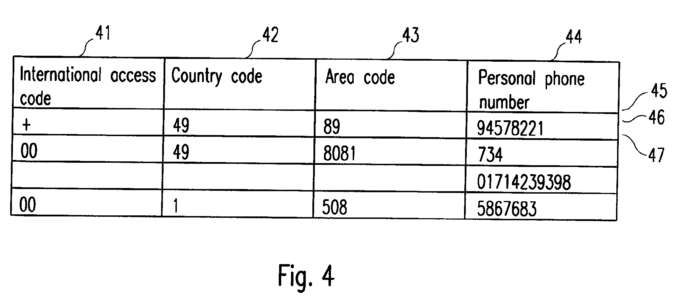

Dependent on pecularities of certain calling line identification systems or telecommunication standards the call-number of a calling party, which is received by the telecomunication device, may have different formats. Whereas the telecommunication system can support a format indicator. This format indicator fixes the properties of a format of the call-number of a calling party being received. The call-number of a calling party can be divided, as shown in figure 4, into the International access code 41, country code 42, area code 43 and personal phone number 44. Figure 4 shows different formats 45,46,47 of the calling party's call-number received by the telecommunication device. The + sign in the format 45 is a space holder indicating the international access code. This generic + sign is used in the GSM-system for mobile phone users, since the international access code may be different from country to country.

The call-number representation may comprise also other special characters. Common functions are pause singals, used to add an accesscode after a phone number, which may be indicated by character like "p". Since the telecomonunciation manufacturer knows all special features and characters, which may be in addition integrated in the call-number representation, due to his own implementation or the requirements of the telecommunication standard, the matching means will take these into consideration. For the reason of simplicity, of the explanation of this invention, these special characters and their handling will be ignored in the further explanation.

The individual specifying information 25 assigned to an individual call-number representation 24 can be entered by a user in the call-number directory 20 so that it bears a meaningful description for identifying the respective calling party.

A generic call-number representation 26 contains only a classifying part common to a certain group of individual call-numbers.

In the example of Fig. 2, the generic call-number representation contains the number of the main terminal of a company's telephone system. To distinguish a generic call-number representation from an individual call-number representation, the number of the main terminal is followed by an identifying character like the "*" shown in Fig. 2. The identifying character must not necessarily be placed at the end of the number representation but can also be set at the beginning or any other suitable place of the generic call-number representation. The special wildcard characters used as identifying characters can have different properties. For example a character like "*" as shown in figure 2 can specify an undefined number of unknown digits. This is advantageous for systems where for example the reception has a shorter number (e.g. 089-94578-0) than the normal employees (e.g. 089-94578-221). Another example could be a character like "%" specifying exactly one unknown digit. This kind of identifying character would be advantageous for a system where just the last digits are used to perform the matching.

In alternative embodiments of the present invention, generic call-numbers may not be represented explicitly or may not be marked as such. Instead a character like e.g. a "-" in the representation of an individual call-number may mark the separation of the generic from the individual part of a respective call-number, like for example a dash separating the main terminal number from the extension.

In a further alternative embodiment any number in the call-number directory 20 is checked for being a subset of the current call-number. In this embodiment an entry representing a main terminal will suffice for a generic match.

Usually, the central main terminal extension number of a company is a "0" or a number having the same length as all other extensions used in its inhouse telephone system like e.g. a number like "000" or "100". Therefore, according to another further embodiment of the present invention, tailing zeros of an individual call-number representation and/or the tailing zeros together with the neighbouring figure are truncated for generating a generic number in the course of a match.

The method 30 of displaying a calling party identification related to the call-number of a calling party according to the present invention is illustrated in Fig. 3. When the telecommunication device 10 receives a call, it also receives the call-number of the respective calling party in step S31. In step S32 the calling party identification retrieval means 13 checks if the call-number of the calling party matches an individual call-number representation in the call-number directory 20. Matching hereby means, that the representation of a call-number in the call-number directory equals the call-number of the calling party. Based on the formats supported from the standard, the complexity of the generic call-number 26 supported by the mobile manufacturer and the acceptable matching accuracy, different matching methods can be used.

A complex system separates the calling party's call-number representation as well as the call-number representation in the call-number directory into the international access code 41, country code 42 and area code 43 and personal phone number 44. In normal cases it would be sufficient simply to match area code 43 and personal phone number 44 of the calling party's call-number representation and the call-number Representation in the call-number directory. In this case it is imaginable that two people calling from two different countries have the same area code and personal phone number. A seperation of area and personal phone number is not needed for the implementation of this invention.

To avoid this also the country code could be included in the matching process.

A less complex system just takes a fixed number of last digits (e.g. last 8 digits) of the calling party's call-number representation and match it with the corresponding fixed number of last digits (e.g. last 8 digits) of the call-number Representation in the call-number directory.

If a call-number representation 24 matching the call-number of the calling party is found in the call-number directory 20, the individual calling party identification 25 assigned to it is displayed on the display 11 of the telecommunication device 10 in step S33.

Next, the system will either proceed to step S36 for displaying the call-number of the calling party or proceed to step S34 which also would have been the next step after S32 if no respective individual call-number representation would have been found in the call-number directory 20. Now, in step S34, it is checked if the call-number of the calling party matches a generic call-number representation 26 of the call-number directory 20. Matching a generic call-number representation means, based on the area and personal number code, that, it is checked if the block of numbers of the area and presonal phone number code present in the generic call-number representation equals a leading sub-set of the same length in the calling party's number area and personal phone number code. To give an example for a better understandingthe complete generic number would be read as "0049 89 123987". This means, that the generic number has following combined area and personal phone number code "89 123987". Assumed a calling party named Alice, having that telephone number "0049 89 123987456" calls, then it is checked if the evaluated generic area and personal phone number code " 89 123987" forms the leading part of Alice's area and personal phone number code when she calls from her office. According to the example given in Fig. 2 this is true so that Alice would be identified as being a member of a group of calling parties called "Tax Consultants" as identified by the generic specifying information 27 associated to this generic call-number representation 26. In this case, the context of Alice when she calls from her office is simply the company or a department thereof which is concerned with tax consulting.

In the case the matching method relies on the last digits it is advantageous to use the previous described identifying character which represent just 1 unknown digit. To give an example for a better understanding it is assumed that following generic call-number representation is entered in the call-number directory "04989123987% % %". Assuming that the e.g. last 8 digits are compared and a calling party named Alice, having that telephone number "004989123987456" calls. Based on the last 8 digit approach the generic number code "23987" is extracted and compared with the leading subset of the last 8 digits of the calling-party representation, which would in this example be "23987456". Based on this example, a match would be detected and the relevant calling party identification associated to this generic call-number representation would be noted.

The two previous examples presented the most common approaches for using the properties of the identifying characters. Nevertheless it is also possible to construct variants of the matching algorithm by combing both kinds of identifying characters and different placing positions in a generic call number representation. Example of such combinations could be "*23987%%%" or "*23987*".

If in step S34 a matching generic call-number representation has been found for the call-number of the calling party, the generic specifying information 27 assigned to that generic call-number representation 26 will be displayed on the display 11. As can be seen from the representation of Fig. 2, a call-number of a calling party may match an individual call-number representation and a generic call-number representation. In this case, both calling party identifications may be displayed on the display 11 of the telecommunication device 10 as shown in Fig. 1.

Because call-numbers are built in a hierarchical order also a hierarchical organisation of generic terms can be organised within the call-number directory. One context given by a generic number could e.g. be the company's name, and still further down even the department within that company. In a special embodiment of the present invention, steps S34 and S35 are therefore passed through in a loop until all generic numbers associated to the call-number of a calling party are found and displayed in an order according to the hierarchical levels.

Finally, the call-number of the calling party may be displayed on the display 11 in step S36. If no individual call-number representation matching the call-number of the calling party could be found in step S32 nor a matching generic call-number representation in step S34, the call-number of the calling party will be displayed alone on display 11 in step S36.

The main advantage of the present invention is that the context of a calling party can be identified even when the specific call-number of the calling party is not known to the phone book or call-number directory 20, respectively, of the telecommunication device 10. Further, the present invention allows to display the information identifying a calling party along with context information which is extremely useful for discerning persons of the same name or for to see e.g. if the respective person calls from a private or from a business phone.

## Claims

1. Method (30) for identifying a calling party comprising the following steps:
- providing a telecommunication device (10) with a call-number directory (20) assigning calling party identifications (23) to defined call-number representations (22),
- matching (S32, S34) a call-number of a calling party with the call-number representations (24, 26) in the call-number directory (20) and,
- in case a generic call-number representation (26) in the call-number directory (20) matches a number sequence of the call-number of a calling party, outputting the calling party identification (27) assigned to said generic call-number representation (26).

2. Method for identifying a calling party according to claim 1,
**characterised in**
**that** a generic call-number representation (26) comprises at least one identifying character for identifying it as a generic call-number representation.

3. Method for identifying a calling party according to claim 1 or 2,
**characterised in**
**that** in case a generic call-number representation (26) in the call-number directory matches a number sequence of the call-number of a calling party, a function of the telecommunication device assigned to said generic call-number representation is executed.

4. Telecommunication device (10) with a call-number directory assigning calling party identifications (23) to defined call-number representations (22) and a retrieval means (13) for outputting a calling party identification (25, 27) corresponding to a call-number of a calling party matching a respective call-number representation (24, 26),
**characterised in**
**that** in case a number sequence of the call-number of a calling party matches a generic call-number representation (26) in the call-number directory (20), the calling party identification (27) assigned to said generic call-number representation is outputted.

5. Telecommunication device according to claim 4,
**characterised in**
**that** a generic call-number representation (26) comprises at least one identifying character for identifying it as a generic call-number representation.

6. Telecommunication device according to claim 4 or 5,
**characterised in**
**that** in case a generic call-number representation (26) in the call-number directory matches a number sequence of the call-number of a calling party, a ringer melody assigned to said generic call-number representation is replayed by the telecommunication device (10).

7. Telecommunication device according to claim 4, 5or 6,
**characterised in**
**that** in case a generic call-number representation (26) in the call-number directory matches a number sequence of the call-number of a calling party, and the call-number of the calling party further matches a further call-number representation (24, 26), the calling party identification assigned to said further call-number representation (24, 26) is outputted along with the calling party identification (26) assigned to said generic call-number.

8. Software product for implementing a method according to one of the claims 1 to 3 in a telecommunication device (10) when stored in a storage means (16) and executed in a processing means (17) of the telecommunication device (10).
